(19) Europäisches Patentamt
European Patent Office
Office européen des brevets

(11) **EP 3 004 807 B1**

(12) **FASCICULE DE BREVET EUROPEEN**

(45) Date de publication et mention de la délivrance du brevet:
**28.12.2016 Bulletin 2016/52**

(21) Numéro de dépôt: **14729265.0**

(22) Date de dépôt: **02.06.2014**

(51) Int Cl.:
**G01C 25/00** (2006.01)      **G01C 19/38** (2006.01)
**G01C 21/16** (2006.01)

(86) Numéro de dépôt international:
**PCT/EP2014/061354**

(87) Numéro de publication internationale:
**WO 2014/195259 (11.12.2014 Gazette 2014/50)**

(54) **PROCEDE DE CALIBRATION AUTONOME D'UN EQUIPEMENT INERTIEL UTILISE EN MODE STATIQUE**

VERFAHREN ZUR AUTONOMEN EICHUNG EINER IN STATISCHEM MODUS VERWENDETEN INERTIALVORRICHTUNG

METHOD FOR AUTONOMOUS CALIBRATION OF AN INERTIAL EQUIPMENT USED IN A STATIC MODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2013 FR 1301248**

(43) Date de publication de la demande:
**13.04.2016 Bulletin 2016/15**

(73) Titulaire: **Safran Electronics & Defense**
**92100 Boulogne-Billancourt (FR)**

(72) Inventeurs:
• **ROBERFROID, David**
**F-92100 Boulogne-Billancourt (FR)**
• **COURNOU, Vincent**
**F-92100 Boulogne-Billancourt (FR)**

(74) Mandataire: **Regimbeau**
**20, rue de Chazelles**
**75847 Paris Cedex 17 (FR)**

(56) Documents cités:
**US-A1- 2009 089 001      US-A1- 2009 089 001**
**US-B1- 6 401 036**

**EP 3 004 807 B1**

**Description**

DOMAINE DE L'INVENTION

Le domaine de l'invention est celui des équipements inertiels utilisés pour l'orientation de systèmes mobiles, dont font partie les centrales inertielles de navigation.
L'invention concerne la calibration autonome d'un tel équipement inertiel, appelé également auto-calibration.

ETAT DE LA TECHNIQUE

Les centrales inertielles de navigation servent notamment à la localisation et à l'orientation de véhicules terrestres. A cet égard, elles sont constituées, entre autres, d'un châssis fixé au système utilisateur, d'un calculateur, de mémoire et d'un coeur inertiel monté rigidement (« strap-down ») par rapport au châssis. Le coeur inertiel comporte des capteurs inertiels tels que des accéléromètres et des gyroscopes (ou gyromètres que l'on assimilera à des gyroscopes dans la suite), qui permettent de définir des axes d'un référentiel senseur.
Les gyroscopes mesurent les rotations angulaires du coeur selon les trois axes du référentiel senseur.
Les accéléromètres mesurent les forces spécifiques du coeur selon les trois axes du référentiel senseur.
Dans la phase d'alignement dite « gyrocompas », les accéléromètres permettent de déterminer le plan horizontal en déterminant la direction du vecteur gravité (détermination du roulis et du tangage), et les gyroscopes permettent de déterminer l'orientation du référentiel senseur par rapport au nord (détermination du cap) en mesurant la rotation terrestre.
Au-delà de cette phase, les mesures des gyroscopes permettent de conserver l'orientation d'un repère de calcul dans lequel sont projetées et intégrées les mesures des accéléromètres permettant ainsi d'obtenir la vitesse et la variation de position.
La précision d'une centrale inertielle de navigation dépend de la précision des capteurs inertiels et de la précision de leur projection dans le repère d'intégration, cette dernière étant également dépendante de la précision des capteurs inertiels.
La précision des gyroscopes peut être affectée par des erreurs de dérive dues au vieillissement de ceux-ci. Une erreur de dérive d'un gyroscope est un décalage à l'origine de la mesure, impliquant qu'une grandeur nulle (en l'espèce une rotation nulle) ne soit pas mesurée à zéro.
Les centrales inertielles installées dans différents systèmes, en particulier des véhicules terrestres, sont fréquemment utilisées lors de missions courtes, de l'ordre de quelques heures, comportant des déplacements et changements de l'orientation ressentie.
Au cours de ces missions, les changements fréquents d'orientations permettent, avec l'apport d'observation externes, de décorréler les erreurs de dérive des gyroscopes des informations qu'ils délivrent, et donc de pouvoir corriger ces informations.
Cependant, les centrales inertielles sont également utilisées en tant que gyrocompas permanent, c'est-à-dire d'outils permettant de déterminer le plan horizontal (roulis et tangage du système) et l'axe du Nord géographique (cap du système) au cours de missions plus longues, de l'ordre de quelques jours à quelques mois en s'appuyant sur des informations externes de vitesse ou de position. Si les systèmes, et donc les centrales inertielles, sont quasi-statiques lors de ces missions longue durée les très faibles déplacements et variations d'orientation auxquels ils sont soumis ne permettent pas de décorréler les erreurs de dérive des gyroscopes des informations qu'ils délivrent. Ce cadre d'emploi peut être, en particulier, rencontré sur des équipements terrestres.
D'autres équipements inertiels, plus simples qu'une centrale inertielle, sont également capables de fournir le cap dans un cas statique. C'est le cas d'un équipement muni uniquement de 2 accéléromètres (ou inclinomètres) et 3 gyroscopes ou plus simplement un équipement avec deux gyroscopes et un système de positionnement de ces gyroscopes dans le plan horizontal.
On connait du document US2012/0259572 un procédé de correction d'erreurs de dérive d'un gyroscope à partir de mesures, à deux moments d'utilisation distincts du gyroscope, du vecteur du champ magnétique terrestre. Cependant ce document ne permet pas d'exploiter l'estimation d'erreurs de dérive sur l'orientation d'un équipement inertiel par rapport au Nord géographique pour déterminer l'erreur de dérive du référentiel senseur.
Le document US2009/008901 A1 décrit l'estimation d'erreurs de dérive d'un équipement inertiel.

PRESENTATION DE L'INVENTION

L'invention a pour but de pallier le manque précité.
En particulier, l'invention a pour but de proposer un procédé de calibration autonome d'un équipement inertiel pour compenser des erreurs de dérive liées aux capteurs de l'équipement.

L'invention a également pour but de proposer un équipement inertiel présentant une précision accrue sur la précision de cap délivré et de longue durée par rapport à l'art antérieur.

A cet égard, l'invention propose selon un premier aspect un procédé de calibration d'un équipement inertiel comprenant un coeur inertiel formant un référentiel senseur, ledit coeur comportant au moins deux gyroscopes, le procédé étant mis en oeuvre au cours d'au moins deux missions successives de l'équipement inertiel, chaque mission comprenant la détermination, à partir de mesures des gyroscopes, de l'orientation de l'équipement dans un référentiel géographique comprenant l'axe du Nord et l'axe de la verticale, les positions relatives du référentiel senseur et du référentiel géographique étant différentes d'une mission à l'autre,
le procédé étant caractérisé par la mise en oeuvre:

- au cours d'une mission de l'équipement, d'une estimation d'erreurs de dérive des gyroscopes sur l'orientation de l'équipement au moins par rapport à l'axe du Nord, et
- au cours d'une mission suivante, d'un calcul de corrections d'erreurs de dérive du référentiel senseur, à partir des erreurs de dérive estimées sur l'orientation de l'équipement, et
- d'un calcul d'erreurs de dérive du référentiel senseur consistant à corriger, à l'aide desdites corrections d'erreurs de dérive du référentiel senseur, les erreurs de dérive du référentiel senseur ayant été calculées lors de la mission précédente.

L'invention est avantageusement complétée par les caractéristiques suivantes, prises seules ou en une quelconque de leur combinaison techniquement possible :

- l'équipement inertiel est une centrale inertielle dont le coeur inertiel comprend trois accéléromètres et trois gyroscopes, l'étape d'estimation d'erreurs de dérive des gyroscopes comprenant en outre l'estimation d'erreurs de dérive des gyroscopes par rapport à l'axe de la verticale.
- le calcul de corrections d'erreurs de dérive du référentiel senseur est réalisé au moyen d'un filtre de Kalman.
- l'estimation des erreurs de dérive des gyroscopes est mise en oeuvre à une fréquence prédéterminée, et le calcul des corrections d'erreurs de dérive est mis en oeuvre à partir d'estimations d'erreurs de dérive moyennées.
- Le procédé comprend en outre, préalablement à chaque étape de calcul d'erreurs de dérive du référentiel senseur, la détermination de l'écart-type des corrections d'erreurs de dérive du référentiel senseur pour chaque axe du référentiel senseur, et le calcul d'erreurs de dérive du référentiel senseur pour un axe est mis en oeuvre si l'écart-type de la correction d'erreurs de dérive de l'axe correspondant est inférieur à un seuil prédéterminé.
- Au cours du procédé, on mémorise la date de chaque session d'utilisation de l'équipement inertiel, le calcul de correction d'erreurs de dérive du référentiel senseur tenant compte de l'évolution temporelle des erreurs de dérive du référentiel senseur selon une loi de vieillissement associé aux gyroscopes.
- la détermination de l'orientation de l'équipement inertiel dans le référentiel géographique à partir des mesures des gyroscopes et l'estimation d'erreurs de dérive des gyroscopes sur ladite orientation sont réalisées au moyen d'un filtre de Kalman.

L'invention concerne également un produit programme d'ordinateur comprenant des instructions de code pour la mise en oeuvre du procédé d'auto-calibration qui précède lorsque celui-ci est mis en oeuvre par un calculateur (30).

L'invention concerne en outre un équipement inertiel comprenant un coeur inertiel formant un référentiel senseur, ledit coeur inertiel comprenant au moins deux gyroscopes, une mémoire, et un calculateur, l'équipement inertiel étant caractérisé en ce que le calculateur est configuré pour mettre en oeuvre le procédé d'auto-calibration décrit précédemment.

Avantageusement, mais facultativement, l'équipement inertiel est une centrale inertielle dont le coeur inertiel comprend trois accéléromètres et trois gyroscopes.

L'invention concerne enfin un système de traitement, comprenant un équipement inertiel comprenant un coeur inertiel formant un référentiel senseur, ledit coeur comprenant au moins deux gyroscopes, ledit système comprenant en outre une mémoire et un calculateur, adaptés pour communiquer à distance avec l'équipement inertiel, le système étant caractérisé en ce que le calculateur est configuré pour mettre en oeuvre le procédé d'auto-calibration qui précède.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente schématiquement un équipement inertiel selon l'invention.
- La figure 2 représente un exemple de positions relatives du référentiel senseur de gyroscopes d'un équipement inertiel et du référentiel géographique,
- La figure 3 représente les principales étapes du procédé selon l'invention.

## DESCRIPTION DETAILLEE D'AU MOINS UN MODE DE MISE EN OEUVRE

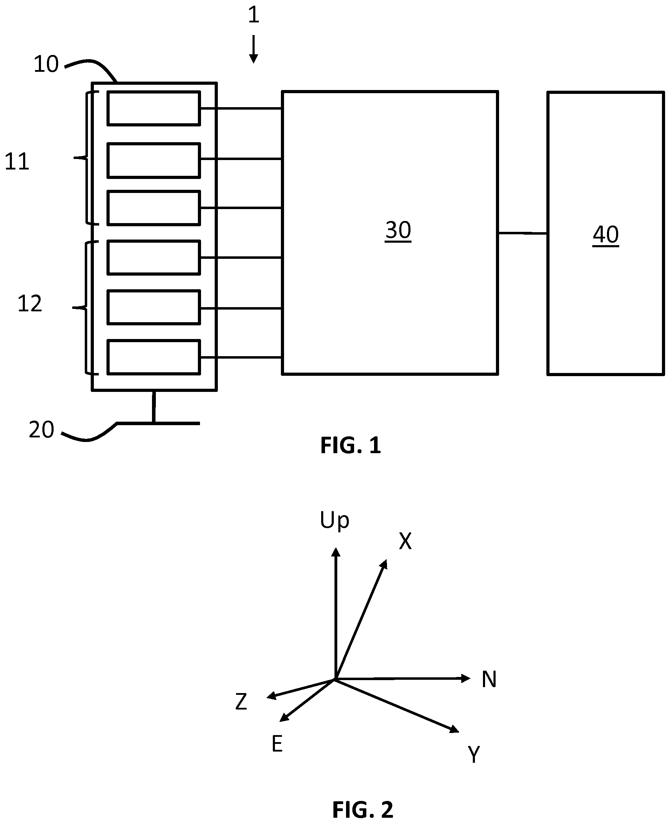

On a représenté en figure 1 un équipement inertiel 1, avantageusement une centrale inertielle, utilisé pour la localisation et l'orientation d'un système sur lequel il est placé. Un tel équipement inertiel comprend un coeur inertiel 10, solidaire d'un châssis 20 destiné à être fixé à un système, par exemple un véhicule, dans lequel est embarqué l'équipement.

Le coeur inertiel 10 est défini par trois axes X, Y, et Z orthogonaux formant le référentiel senseur, et comporte au moins deux gyroscopes 11, et de préférence, dans le cas d'une centrale inertielle, trois gyroscopes 11 aptes à mesurer des rotations autour des axes X, Y, et Z du coeur de la centrale par rapport à un repère inertiel fixe arbitraire $(X_i, Y_i, Z_i)$, ainsi qu'au moins deux accéléromètres 12, et de préférence trois accéléromètres 12 pour mesurer les forces spécifiques ressenties par le coeur selon les trois axes $X_i, Y_i, Z_i$ du repère inertiel fixe.

Un équipement inertiel 1 comportant trois gyroscopes 11 peut également, à défaut de comporter trois accéléromètres, comporter deux accéléromètres ou tout autre dispositif permettant de déterminer l'orientation des axes des gyroscopes par rapport à la verticale.

Dans le cas d'un équipement inertiel 1 comprenant deux gyroscopes 11 seulement, ledit équipement comporte en plus un dispositif de positionnement de ces derniers dans le plan horizontal.

Ainsi les différents types d'équipements inertiels sont les suivants :

- Une centrale inertielle comprenant trois gyroscopes et trois accéléromètres ou inclinomètres, ou
- Un équipement inertiel comprenant trois gyroscopes et deux accéléromètres ou tout autre dispositif permettant de déterminer l'orientation des axes des gyroscopes par rapport à la verticale, ou encore
- Un équipement inertiel comprenant deux gyroscopes et un dispositif de positionnement des gyroscopes dans le plan horizontal.

Un calculateur 30, pouvant faire partie de l'équipement inertiel 1 (comme représenté sur la figure 1), ou alternativement étant une unité de traitement située à distance dudit équipement et étant pourvue de moyens de communication avec ledit équipement, reçoit les résultats des mesures des capteurs et, à partir de ces résultats, détermine une orientation de l'équipement dans un référentiel géographique. Ce traitement des données est connu en soi et déjà implémenté dans de nombreux équipements inertiels.

Une mémoire 40 est également prévue pour enregistrer des données de calcul du calculateur 30, notamment d'une mission à une autre.

On a représenté en figure 2 un exemple de configuration relative entre le référentiel senseur des gyroscopes de l'équipement et le référentiel géographique, qui comprend l'axe de la verticale Up, l'axe du Nord N, et l'axe de l'Est E.

Le vieillissement des gyroscopes entraine des erreurs dans les mesures des rotations de l'équipement inertiel, qui impactent directement les données sur l'orientation dudit équipement, en générant un décalage entre l'orientation par rapport au Nord (Cap) calculée à partir des mesures des capteurs et l'orientation réelle de l'équipement.

En particulier, les erreurs de dérives des gyroscopes des axes X, Y et Z du référentiel senseur résultent en des dérives dans les axes du repère géographique Up *(dgyrUp),* Nord (*dgyrN*) et Est (*dgyrE*), qui sont liées avec certaines erreurs d'orientation et de positionnement de l'équipement inertiel lors de la phase de gyrocompas selon les relations suivantes (équations au signe près selon les conventions) :

$$dgyrE \approx ErrCap * \Omega t * \cos(Lat)$$

$$dgyrN \approx ErrLat * \Omega t * \sin(Lat)$$

$$dgyrUp \approx ErrLat * \Omega t * \cos(Lat)$$

Avec

- $\Omega t$ : valeur de rotation terrestre
- Lat : latitude de l'équipement inertiel 1,

- ErrCap : erreur de cap de l'équipement,
- ErrLat : erreur de latitude de l'équipement.

L'erreur de latitude peut être éliminée en fournissant la position de l'équipement, ce qui permet de rendre observable les dérives dans les axes Nord et, après un temps d'observation plus important, Up (hypothèse faite dans le cas présent).

Cependant, si les axes du référentiel senseur ne sont pas alignés avec les axes du référentiel géographique, il n'est pas possible de distinguer les différentes dérives senseurs entre elles.

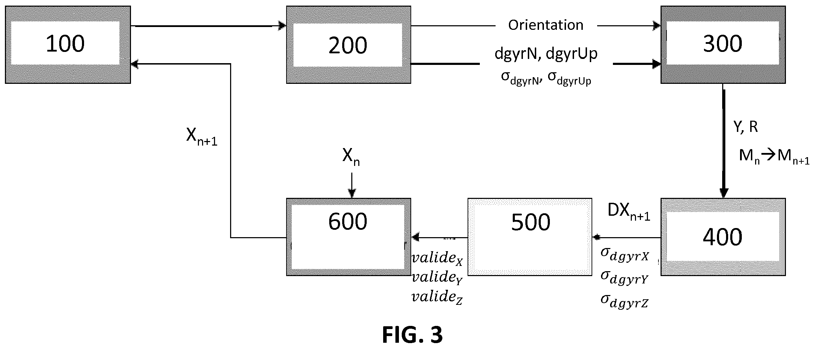

De ce fait, conformément au procédé présenté en figure 3, on exploite les données d'orientation générées au cours de différentes missions $M_n$, $M_{n+1}$ de l'équipement inertiel. On appelle mission la phase statique pendant laquelle un alignement de type gyrocompas est réalisé.

On suppose que l'orientation de l'équipement inertiel diffère entre des missions, notamment lors de deux missions pour lesquelles les positions relatives du référentiel senseur par rapport au référentiel géographique sont différentes.

En relevant les dérives par rapport à l'axe Nord et par rapport à l'axe Up au cours de missions distinctes (au minimum deux), on peut en déduire les dérives de chacun des gyroscopes (dans les axes X, Y, et Z) et les corriger afin d'améliorer la précision de Cap fournie par l'équipement inertiel.

Pour ce faire, on va maintenant décrire les différentes étapes du procédé d'auto-calibration selon l'invention, qui comprend la mise en oeuvre d'un filtre d'auto-calibration des erreurs de dérive des gyroscopes décrit ci-après par le calculateur 30. A cet égard, le calculateur 30 peut exécuter un programme comprenant des instructions de code permettant la mise en oeuvre de ce procédé.

Ce procédé est mis en oeuvre au cours d'au moins deux missions $M_n$, $M_{n+1}$ distinctes de l'équipement ou de la centrale, au cours desquelles le calculateur détermine une orientation de l'équipement ou la centrale à partir de données acquises par les senseurs. Les positions relatives du référentiel senseur et du référentiel géographique varient entre $M_n$ et $M_{n+1}$.

Au cours de chaque mission $M_n$, une étape 100 consiste à acquérir les données senseurs, notamment des gyroscopes, et leur appliquer non seulement une correction issue de données mémorisées et identifiées en usine, mais également issue des valeurs d'autocalibration identifiées au cours d'une mission précédente $M_{n-1}$ par la méthode décrite ci-après.

Au cours d'une étape 200, les données senseurs corrigées de l'étape 100 sont utilisées pour réaliser une fonction gyrocompas utilisant un filtrage mis en oeuvre par le calculateur, avantageusement un filtre de KALMAN.

Ce filtre de KALMAN estime l'orientation de la Centrale Inertielle (Cap, Roulis et Tangage), une erreur de dérive des gyroscopes autour de l'axe du nord N dgyrN, une erreur de dérive des gyroscopes autour de l'axe de la verticale Up dgyrUp, ainsi que les écarts-types $\sigma_{dgyrN}$ et $\sigma_{dgyrUp}$ des erreurs de dérive des gyroscopes respectivement par rapport au Nord et par rapport à la verticale.

Ces deux étapes 100 et 200 sont couramment réalisées par une centrale inertielle 1. Dans le cas d'un équipement inertiel, ces étapes 100 et 200 sont également réalisées, à l'exception près que l'erreur de dérive par rapport à la verticale et l'écart-type correspondant ne sont pas calculés.

Le calculateur déduit de ces informations, au cours d'une sous-étape 300, dans le cas d'une centrale inertielle, un vecteur d'observation $Y_n$ du filtre d'autocalibration constitué des erreurs de dérive estimées, $Y_n = \begin{pmatrix} \widehat{dgyrN} \\ \widehat{dgyrUp} \end{pmatrix}$ et d'autre part une matrice $R_n$ de bruit de mesure des erreurs de dérive en axe senseur

$$R_n = \begin{pmatrix} \widehat{\sigma^2_{dgyrN}} & \widehat{\sigma^2_{dgyrN,dgyrUp}} \\ \widehat{\sigma^2_{dgyrN,dgyrUp}} & \widehat{\sigma^2_{dgyrUp}} \end{pmatrix},$$

où $\sigma^2_{dgyrN}$ et $\sigma^2_{dgyrUp}$ sont respectivement les variances des états d'erreur de dérive des gyroscopes par rapport au Nord et par rapport à la verticale, et $\sigma^2_{dgyrN,dgyrUp}$ est la covariance entre les états d'erreur de dérive des gyroscope par rapport au Nord et par rapport à la verticale.

Dans le cas d'un équipement inertiel ne comprenant que deux gyroscopes, les estimations d'erreurs de dérive des gyroscopes sur l'orientation de l'équipement ne sont calculées que par rapport à l'axe du Nord, le vecteur d'observation du filtre d'autocalibration est donc $Y_n = \left( \widehat{dgyrN} \right)$ et la matrice de bruit $R_n$ est $R_n = \left( \widehat{\sigma^2_{dgyrN}} \right)$.

Pour constituer le vecteur $Y_n$ et la matrice $R_n$ les plus représentatifs, l'équipement peut prendre les valeurs moyennes sur la durée de la mission des erreurs de dérive autour de l'axe du Nord et autour de l'axe de la verticale, des variances des états d'erreur de dérive des gyroscopes par rapport au Nord, le cas échéant, et par rapport à la verticale, et le cas échéant, de la covariance entre les états d'erreur de dérive des gyroscopes par rapport au Nord et par rapport à la verticale, les étapes 100 et 200 étant itérées à une fréquence prédéterminée.

Les matrices $Y_n$ et $R_n$ sont enregistrées dans la mémoire 40. Ces données doivent être mémorisées d'une mission $M_n$ à la mission suivante $M_{n+1}$.

Le calculateur 30 détermine également une matrice $H_n$ de passage des axes du référentiel senseur aux axes du Nord et de la verticale du repère géographique. Cette matrice $H_n$, se déduisant des angles d'EULER (Cap, Roulis et Tangage) est de la forme :

$$H_n = \begin{pmatrix} a_{00} & a_{01} & a_{02} \\ a_{20} & a_{21} & a_{22} \end{pmatrix}$$

Cette matrice est également enregistrée dans la mémoire 40.

Lors d'une mission ultérieure $M_{n+1}$, on cherche à déterminer et à corriger la dérive des gyroscopes (et donc du référentiel senseur) par rapport à la mission précédente $M_n$.

Au cours d'une sous-étape 400, un second filtre dédié, avantageusement du type filtre de KALMAN, se charge d'estimer les erreurs de dérives en axe senseurs ($dgyr_X$, $dgyr_Y$ et $dgyr_Z$) à partir des données mémorisées dans l'étape 300 de la mission précédente et de ses propres données mémorisées. Pour cela, il utilise les éléments suivants :

- $Y_n$ : Vecteur d'observation issu de l'étape 300 lors de la mission précédente $M_n$.
- $H_n$ : Matrice d'observation issue de l'étape 300 lors de la mission $M_n$.
- $R_n$ : Matrice de bruit de mesure issue de l'étape 300 lors de la mission $M_n$.
- $P_n$ : matrice de covariance (les éléments diagonaux étant les variances desdites dérives et les autres éléments étant les covariances des dérives entre deux axes) issue du calcul de la mission précédente $M_n$, de la forme

$$P_n = \begin{pmatrix} \sigma^2_{dgyrX} & \sigma^2_{dgyrX,dgyrY} & \sigma^2_{dgyrX,dgyrZ} \\ \sigma^2_{dgyrX,dgyrY} & \sigma^2_{dgyrY} & \sigma^2_{dgyrY,dgyrZ} \\ \sigma^2_{dgyrX,dgyrZ} & \sigma^2_{dgyrY,dgyrZ} & \sigma^2_{dgyrZ} \end{pmatrix}$$

- Q : matrice de bruit d'état
- $DX_{n+1}$ : Vecteur d'état d'erreurs de dérive gyroscopique à la mission courante n+1 :

$$DX_{n+1} = \begin{pmatrix} \delta gyrX \\ \delta gyrY \\ \delta gyrZ \end{pmatrix}.$$

Le calculateur 30 détermine alors la meilleure estimée des dérives gyroscopiques, en calculant son gain $K_{n+1}$ selon la formule, $K_{n+1} = (P_n + Q).H_n^T.[H_n.(P_n + Q).H_n^T + R_n]^{-1}$ et en l'appliquant, comme tout filtre de KALMAN, pour estimer la nouvelle matrice $P_{n+1}$ associée au nouveau vecteur d'état $DX_{n+1}$.

$$P_{n+1} = (I - K_n.H_n).(P_n + Q),$$

$$DX_{n+1} = DX_n + K_{n+1}(Y_n - H_n DX_n)$$

Il est à noter que la matrice Q peut soit dépendre de la durée entre deux étapes successives selon une loi de vieillissement déterminée associée aux gyroscopes - à cet égard, les dates des missions M sont mémorisées, pour pouvoir calculer ladite durée entre deux étapes successives - soit être choisie constante en l'absence de connaissance du temps passé entre deux missions M consécutives.

La matrice $P_{n+1}$ et le vecteur $DX_{n+1}$ sont enregistrés dans la mémoire 40 au cours de l'étape 400, pour pouvoir être réutilisée lors de la mission ultérieure $M_{n+2}$.

Au cours d'une étape 500, le calculateur analyse la précision obtenue pour chacune des estimées des erreurs de dérives gyroscopiques, afin de leur attribuer une validité. Pour cela, il compare les écarts-types des corrections sur chaque axe à un seuil prédéterminé. Ces écarts-types correspondent aux racines carrées des éléments de la diagonale de la matrice P.

Le calculateur attribue à la comparaison sur chaque axe un indicateur correspondant. On appelle (valide$_x$, valide$_y$, valide$_z$) ces trois indicateurs. Si un écart-type pour un axe est inférieur au seuil prédéterminé, l'indicateur correspondant peut prendre la valeur 1, la valeur 0 sinon.

Au cours d'une étape 600, le calculateur 30 corrige les erreurs de dérive $X_n$ qui avaient été obtenues lors de la mission précédente $M_n$, en ajoutant les corrections $DX_{n+1}$ déterminées précédemment auxdites erreurs de dérive $X_n$ obtenues à l'étape précédente, et ce, en fonction de la valeur des indicateurs.

Les nouvelles valeurs de dérive $X_{n+1}$ issues du processus d'autocalibration sont alors enregistrées dans la mémoire 40 au cours de l'étape 600, en vue d'être utilisées dans l'étape 100 de la mission courante $M_{n+1}$ d'acquisition des données senseurs, et de correction desdites données.

## Revendications

1. Procédé d'auto-calibration d'un équipement inertiel (1) comprenant un coeur inertiel (10) formant un référentiel senseur, ledit coeur comportant au moins deux gyroscopes,
le procédé étant mis en oeuvre au cours d'au moins deux missions successives ($M_n$, $M_{n+1}$) de l'équipement inertiel (1), chaque mission étant une phase statique comprenant la détermination, à partir de mesures des gyroscopes (11), de l'orientation de l'équipement (1) dans un référentiel géographique comprenant l'axe du Nord (N) et l'axe de la verticale (Up), les positions relatives du référentiel senseur (X,Y,Z) et du référentiel géographique étant différentes d'une mission à l'autre,
le procédé étant **caractérisé par** la mise en oeuvre:

   - au cours d'une mission ($M_n$) de l'équipement (1), d'une estimation (200) d'erreurs de dérive ($X_n$) des gyroscopes sur l'orientation de l'équipement au moins par rapport à l'axe du Nord (*dgyrN*), et
   - au cours d'une mission suivante ($M_{n+1}$), d'un calcul (400) de corrections d'erreurs de dérive ($DX_n$) du référentiel senseur (X,Y,Z), à partir des erreurs de dérive estimées sur l'orientation de l'équipement, et
   - d'un calcul d'erreurs (600) de dérive ($X_{n+1}$) du référentiel senseur (X,Y,Z) consistant à corriger, à l'aide desdites corrections ($DX_n$) d'erreurs de dérive du référentiel senseur, les erreurs de dérive ($X_n$) du référentiel senseur ayant été estimées lors de la mission précédente ($M_n$).

2. Procédé d'auto-calibration selon la revendication 1, l'équipement inertiel étant une centrale inertielle (1), dont le coeur inertiel (10) comprend trois accéléromètres (12) et trois gyroscopes (11),
dans lequel l'étape d'estimation (200) d'erreurs de dérive (*dgyrUp*, *dgyrN*) des gyroscopes comprend en outre l'estimation d'erreurs de dérive des gyroscopes par rapport à l'axe de la verticale.

3. Procédé d'auto-calibration selon l'une des revendications 1 ou 2, dans lequel le calcul (400) de corrections d'erreurs de dérive ($DX_n$) du référentiel senseur (X,Y,Z) est réalisé au moyen d'un filtre de Kalman.

4. Procédé d'auto-calibration selon l'une des revendications précédentes, dans lequel l'estimation (200) des erreurs de dérive des gyroscopes est mise en oeuvre à une fréquence prédéterminée, et le calcul (400) des corrections d'erreurs de dérive est mis en oeuvre à partir d'estimations d'erreurs de dérive moyennées (300).

5. Procédé d'auto-calibration selon la revendication précédente, comprenant en outre, préalablement à chaque étape (600) de calcul d'erreurs de dérive du référentiel senseur, la détermination (500) de l'écart-type des corrections d'erreurs de dérive ($DX_n$) du référentiel senseur pour chaque axe du référentiel senseur, et le calcul d'erreurs de dérive (600) du référentiel senseur pour un axe est mis en oeuvre si l'écart-type de la correction d'erreurs de dérive de l'axe correspondant est inférieur à un seuil prédéterminé.

6. Procédé d'auto-calibration selon la revendication 1, dans lequel on mémorise la date de chaque session d'utilisation de l'équipement inertiel (1), le calcul de correction d'erreurs de dérive (400) du référentiel senseur tenant compte de l'évolution temporelle des erreurs de dérive du référentiel senseur selon une loi de vieillissement associé aux gyroscopes (11).

**7.** Procédé d'auto-calibration selon l'une des revendications précédentes, dans lequel la détermination de l'orientation de l'équipement inertiel dans le référentiel géographique à partir des mesures des gyroscopes et l'estimation (200) d'erreurs de dérive des gyroscopes sur ladite orientation sont réalisées au moyen d'un filtre de Kalman.

**8.** Produit programme d'ordinateur comprenant des instructions de code pour la mise en oeuvre du procédé de calibration selon l'une des revendications précédentes lorsque celui-ci est mis en oeuvre par un calculateur (30).

**9.** Equipement inertiel (1) comprenant un coeur inertiel (10) formant un référentiel senseur (X,Y,Z), ledit coeur inertiel (10) comprenant au moins deux gyroscopes (11), une mémoire (40), et un calculateur (30), l'équipement inertiel (1) étant **caractérisé en ce que** le calculateur (30) est configuré pour mettre en oeuvre le procédé selon l'une des revendications 1 à 7.

**10.** Equipement inertiel selon la revendication précédente, ledit équipement étant une centrale inertielle dont le coeur inertiel (10) comprend trois accéléromètres (12) et trois gyroscopes (11).

**11.** Système de traitement, comprenant un équipement inertiel (1) comprenant un coeur inertiel (10) formant un référentiel senseur, ledit coeur comprenant au moins deux gyroscopes, ledit système comprenant en outre une mémoire (40) et un calculateur (30), adaptés pour communiquer à distance avec l'équipement inertiel (1), le système étant **caractérisé en ce que** le calculateur est configuré pour mettre en oeuvre le procédé selon l'une des revendications 1 à 7.

**Patentansprüche**

**1.** Autokalibrierverfahren für eine Trägheitsvorrichtung (1) mit einem Trägheitskern (10), der einen Sensorbezug bildet, wobei der Kern mindestens zwei Kreisel umfasst,
wobei das Verfahren während mindestens zwei aufeinanderfolgenden Einsätzen ($M_n$, $M_{n+1}$) der Trägheitsvorrichtung (1) durchgeführt wird, wobei jeder Einsatz eine statische Phase ist, die das Bestimmen, anhand von Messwerten der Kreisel (11), der Orientierung der Vorrichtung (1) in einem die Nordachse (N) und die Hochachse (Up) umfassenden geographischen Bezugssystem umfasst, wobei die relativen Positionen des Sensorbezugs (X,Y,Z) und des geographischen Bezugssystems von einem Einsatz zum nächsten verschieden sind, wobei das Verfahren **dadurch gekennzeichnet ist, dass** Folgendes durchgeführt wird:

- Schätzen (200), während eines Einsatzes ($M_n$) der Vorrichtung (1), der Kreisel-Driftfehler ($X_n$) der Orientierung der Vorrichtung mindestens bezüglich der Nordachse *(dgyrN),* und
- Berechnen (400), während eines nachfolgenden Einsatzes ($M_{n+1}$), von Driftfehlerkorrekturen ($DX_n$) des Sensorbezugs (X,Y,Z) anhand der für die Orientierung der Vorrichtung geschätzten Driftfehler, und
- Berechnen (600) der Driftfehler ($X_{n+1}$) des Sensorbezugs (X,Y,Z) und dabei Korrigieren der während des vorhergehenden Einsatzes ($M_n$) geschätzten Sensorbezug-Driftfehler ($X_n$) mit Hilfe der Sensorbezug-Driftfehlerkorrekturen ($DX_n$).

**2.** Autokalibrierverfahren nach Anspruch 1, wobei die Trägheitsvorrichtung ein Trägheitsnavigationssystem (1) ist, dessen Trägheitskern (10) drei Beschleunigungsmesser (12) und drei Kreisel (11) umfasst,
wobei der Schritt des Schätzens (200) der Kreisel-Driftfehler *(dgyrup, dgyrN)* außerdem das Schätzen der Kreisel-Driftfehler bezüglich der Hochachse umfasst.

**3.** Autokalibrierverfahren nach einem der Ansprüche 1 oder 2, wobei das Berechnen (400) der Driftfehlerkorrekturen ($DX_n$) des Sensorbezugs (X,Y,Z) mittels eines Kalman-Filters erfolgt.

**4.** Autokalibrierverfahren nach einem der vorhergehenden Ansprüche, wobei das Schätzen (200) der Kreisel-Driftfehler mit einer vorgegebenen Taktfrequenz durchgeführt wird und das Berechnen (400) der Driftfehlerkorrekturen anhand von Schätzungen gemittelter Driftfehler (300) durchgeführt wird.

**5.** Autokalibrierverfahren nach dem vorhergehenden Anspruch, außerdem umfassend vor jedem Schritt (600) der Sensorbezug-Driftfehlerberechnung das Bestimmen (500) der Standardabweichung der Sensorbezug-Driftfehlerkorrekturen ($DX_n$) für jede Achse des Sensorbezugs, wobei für eine Achse die Sensorbezug-Driftfehlerberechnung (600) durchgeführt wird, wenn die Standardabweichung der Driftfehlerkorrektur der entsprechenden Achse kleiner als eine vorgegebene Schwelle ist.

**6.** Autokalibrierverfahren nach Anspruch 1, wobei der Zeitpunkt jeder Anwendungssitzung der Trägheitsvorrichtung (1) gespeichert wird und wobei die Driftfehlerkorrekturberechung (400) für den Sensorbezug die zeitliche Entwicklung der Sensorbezug-Driftfehler gemäß einem den Kreiseln (11) zugeordneten Alterungsverlauf berücksichtigt.

**7.** Autokalibrierverfahren nach einem der vorhergehenden Ansprüche, wobei das Bestimmen der Orientierung der Trägheitsvorrichtung in dem geographischen Bezugssystem anhand von Messwerten der Kreisel und das Schätzen (200) der Kreisel-Driftfehler bezüglich der Orientierung mittels eines Kalman-Filters erfolgen.

**8.** Computerprogrammprodukt, umfassend Programmcodeanweisungen für die Durchführung des Kalibrierverfahrens nach einem der vorhergehenden Ansprüche, wenn dieses Letztere von einem Rechner (30) durchgeführt wird.

**9.** Trägheitsvorrichtung (1) mit einem Trägheitskern (10), der einen Sensorbezug (X,Y,Z) bildet, wobei der Trägheitskern (10) mindestens zwei Kreisel (11), einen Speicher (40) und einen Rechner (30) umfasst, wobei die Trägheitsvorrichtung (1) **dadurch gekennzeichnet ist, dass** der Rechner (30) dafür konfiguriert ist, das Verfahren nach einem der Ansprüche 1 bis 7 durchzuführen.

**10.** Trägheitsvorrichtung nach dem vorhergehenden Anspruch, wobei die Vorrichtung ein Trägheitsnavigationssystem ist, dessen Trägheitskern (10) drei Beschleunigungsmesser (12) und drei Kreisel (11) umfasst.

**11.** Verarbeitungssystem, umfassend eine Trägheitsvorrichtung (1) mit einem Trägheitskern (10), der einen Sensorbezug (X,Y,Z) bildet, wobei der Kern mindestens zwei Kreisel umfasst, wobei das System außerdem einen Speicher (40) und einen Rechner (30) umfasst, die für eine Fernkommunikation mit der Trägheitsvorrichtung (1) ausgelegt sind, wobei das System **dadurch gekennzeichnet ist, dass** der Rechner dafür konfiguriert ist, das Verfahren nach einem der Ansprüche 1 bis 7 durchzuführen.

**Claims**

**1.** Auto-calibration method of inertial equipment (1) comprising an inertial core (10) forming a sensor reference frame, said core comprising at least two gyroscopes,
the method being executed during at least two successive missions ($M_n$, $M_{n+1}$) of the inertial equipment (1), each mission being a static phase comprising the determination, from measurements of the gyroscopes (11), of the orientation of the equipment (1) in a geographic reference frame comprising the axis of North (N) and the axis of the vertical (Up), the relative positions of the sensor reference frame (X,Y,Z) and of the geographic reference frame being different from one mission to the other,
the method being **characterised by** carrying out:

- during a mission ($M_n$) of the equipment (1) an estimation (200) of drift errors ($X_n$) of the gyroscopes on the orientation of the equipment at least relative to the axis of North (*dgyrN*), and
- during a following mission ($M_{n+1}$), a calculation of drift (400) of error corrections ($DX_n$) of the sensor reference frame (X,Y,Z), from drift errors estimated on the orientation of the equipment, and
- a calculation of drift ($X_{n+1}$) errors (600) of the sensor reference frame (X,Y,Z) consisting of correcting by means of said corrections ($DX_n$) of drift errors of the sensor reference frame, the drift errors ($X_n$) of the sensor reference frame having been estimated during the preceding mission ($M_n$).

**2.** Auto-calibration method according to claim 1, the inertial equipment being an inertial unit (1), the inertial core (10) of which comprises three accelerometers (12) and three gyroscopes (11),
wherein the estimation step (200) of drift errors (*dgyrUp,dgyrN*) of the gyroscopes further comprises the estimation of drift errors of the gyroscopes relative to the axis of the vertical.

**3.** Auto-calibration method according to any one of claims 1 or 2, wherein the calculation (400) of drift ($DX_n$) error corrections of the sensor reference frame (X,Y,Z) is performed by means of a Kalman filter.

**4.** Auto-calibration method according to any one of the preceding claims, wherein the estimation (200) of the drift errors of the gyroscopes is performed at a predetermined frequency, and the calculation (400) of the drift error corrections is performed from estimations of averaged drift errors (300).

**5.** Auto-calibration method according to the preceding claim, also comprising prior to each calculation step (600) of drift errors of the sensor reference frame, the determination (500) of the standard deviation of drift error corrections ($DX_n$) of the sensor reference frame for each axis of the sensor reference frame, and the calculation of drift errors (600) of the sensor reference frame for an axis is performed if the standard deviation of the correction of drift errors of the corresponding axis is less than a predetermined threshold.

6. Auto-calibration method according to claim 1, wherein the date of each usage session of the inertial equipment (1) is stored, the correction calculation of drift errors (400) of the sensor reference frame taking into account the temporal evolution of the drift errors of the sensor reference frame according to an ageing law linked to the gyroscopes (11).

7. Auto-calibration method according to any one of the preceding claims, wherein the determination of the orientation of the inertial equipment in the geographic reference frame from measurements of gyroscopes and the estimation (200) of drift errors of gyroscopes on said orientation are carried out by means of a Kalman filter.

8. Computer program product comprising code instructions for executing the calibration method according to any one of the preceding claims when the latter is executed by a computer (30).

9. Inertial equipment (1) comprising an inertial core (10) forming a sensor reference frame (X,Y,Z), said inertial core (10) comprising at least two gyroscopes (11), a memory (40), and a computer (30), the inertial equipment (1) being **characterised in that** the computer (30) is configured to execute the method according to any one of claims 1 to 7.

10. Inertial equipment according to the preceding claim, said equipment being an inertial unit, the inertial core (10) of which comprises three accelerometers (12) and three gyroscopes (11).

11. Processing system comprising inertial equipment (1) including an inertial core (10) forming a sensor reference frame, said core comprising at least two gyroscopes, said system also comprising a memory (40) and a computer (30), adapted to communicate remotely with the inertial equipment (1), the system being **characterised in that** the computer is configured to execute the method according to any one of claims 1 to 7.

1

10

11

12

20

**FIG. 1**

Up

X

N

Z

E

Y

**FIG. 2**

FIG. 3

**EP 3 004 807 B1**

**RÉFÉRENCES CITÉES DANS LA DESCRIPTION**

**Documents brevets cités dans la description**

- US 20120259572 A
- US 2009008901 A1